(19) Europäisches Patentamt
European Patent Office
Office européen des brevets

(11) **EP 3 790 282 B1**

(12) **FASCICULE DE BREVET EUROPEEN**

(45) Date de publication et mention de la délivrance du brevet:
**05.04.2023 Bulletin 2023/14**

(21) Numéro de dépôt: **20193229.0**

(22) Date de dépôt: **27.08.2020**

(51) Classification Internationale des Brevets (IPC):
**H04N 21/8547** (2011.01)  **H04N 21/434** (2011.01)
**H04L 65/80** (2022.01)  **H04N 21/436** (2011.01)

(52) Classification Coopérative des Brevets (CPC):
**H04N 21/4305; H04L 65/612; H04L 65/762;**
**H04L 65/765; H04L 65/80; H04N 21/23608;**
**H04N 21/242; H04N 21/4307; H04N 21/4344;**
**H04N 21/43615; H04N 21/439; H04N 21/44004;**
**H04N 21/8106; H04N 21/8547;** H04L 65/611

(54) **PROCEDE DE DECODAGE D'UN FLUX D'ENTREE AUDIO/VIDEO**

DEKODIERUNGSVERFAHREN EINES AUDIO/VIDEO EINGANGSSTROMS

DECODING METHOD OF AN AUDIO/VIDEO INPUT STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2019 FR 1909729**

(43) Date de publication de la demande:
**10.03.2021 Bulletin 2021/10**

(73) Titulaire: **SAGEMCOM BROADBAND SAS**
**92500 Rueil-Malmaison (FR)**

(72) Inventeurs:
• **DELPLACE, Stéphane**
**92500 RUEIL MALMAISON (FR)**
• **SODI, Frédéric**
**92500 RUEIL MALMAISON (FR)**
• **BERGER, Jérôme**
**92500 RUEIL MALMAISON (FR)**

(74) Mandataire: **Lavaud, Thomas et al**
**Cabinet Boettcher**
**16, rue Médéric**
**75017 Paris (FR)**

(56) Documents cités:
**EP-A1- 3 113 498      EP-A1- 3 209 016**
**US-A1- 2014 098 811      US-A1- 2018 288 499**

• **"Digital Video Broadcasting (DVB); Companion Screens and Streams; Part 2: Content Identification and Media Synchronization", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. BROADCAS, no. V1.2.1 3 août 2017 (2017-08-03), pages 1-174, XP014301550, Extrait de l'Internet: URL:http://www.etsi.org/deliver/etsi_ts/10 3200_103299/10328602/01.02.01_60/ts_103286 02v010201p.pdf [extrait le 2017-08-03]**

**Description**

L'invention concerne le domaine des boîtiers décodeurs et du décodage des flux d'entrée audio/vidéo.

ARRIERE PLAN DE L'INVENTION

Un boîtier décodeur (ou *set-top box,* en anglais) qui fonctionne selon la norme ISO/IEC 13818-1 reçoit un flux d'entrée audio/vidéo, décode le flux d'entrée audio/vidéo, et le synchronise avant sa diffusion.

Le flux d'entrée audio/vidéo peut être transmis au boîtier décodeur par câble, par satellite, mais aussi via une liaison IP (par exemple DASH-TS ou HLS-TS), c'est-à-dire via une liaison qui utilise un protocole internet.

Le flux d'entrée audio/vidéo comprend des échantillons audio et des échantillons vidéo qui sont multiplexés. Chaque échantillon est horodaté grâce à un marqueur temporel de présentation (ou PTS, pour *Présentation Time Stamp).* Le marqueur temporel de présentation définit la date à laquelle l'échantillon doit être rendu (joué pour l'audio, affiché pour la vidéo).

Le flux d'entrée audio/vidéo transporte un signal d'horloge de référence (ou PCR, pour *Program Clock Reference).* Le boîtier décodeur utilise le signal d'horloge de référence pour asservir son horloge interne (ou STC, pour *System Time Clock)* et cadencer correctement l'affichage des échantillons.

L'affichage vidéo se fait alors généralement sur une télévision.

L'audio, quant à lui, peut être joué soit par la télévision, soit par un amplificateur audio/vidéo (connecté par exemple à un port HDMI ou à un port SPDI/F du boîtier décodeur), soit par un autre équipement de diffusion audio connecté directement au boîtier décodeur via le port HDMI ou le port SPD/IF ou bien à travers une diffusion sans fil de type Wi-Fi ou *Bluetooth.* L'équipement de diffusion audio est par exemple une barre de son ou une enceinte connectée.

Chacun de ces équipements introduit une latence qui résulte notamment du temps de traitement interne de ces équipements. L'évaluation de cette latence peut être réalisée de différentes manières. La latence peut par exemple être directement fournie par l'équipement lui-même, par la transmission des données EDID (pour *Extended Display Identification Data)* via le port HDMI. La latence peut aussi par exemple être évaluée par la mesure d'un décalage entre l'émission et la réception d'un signal sonore.

Si l'audio et la vidéo ne sont pas rendus par le même équipement, la latence audio du chemin audio et la latence vidéo du chemin vidéo doivent être égales pour ne pas introduire de décalage entre le son et l'image, qui serait perçu par l'utilisateur. Un tel décalage peut générer par exemple un problème de synchronisation labiale.

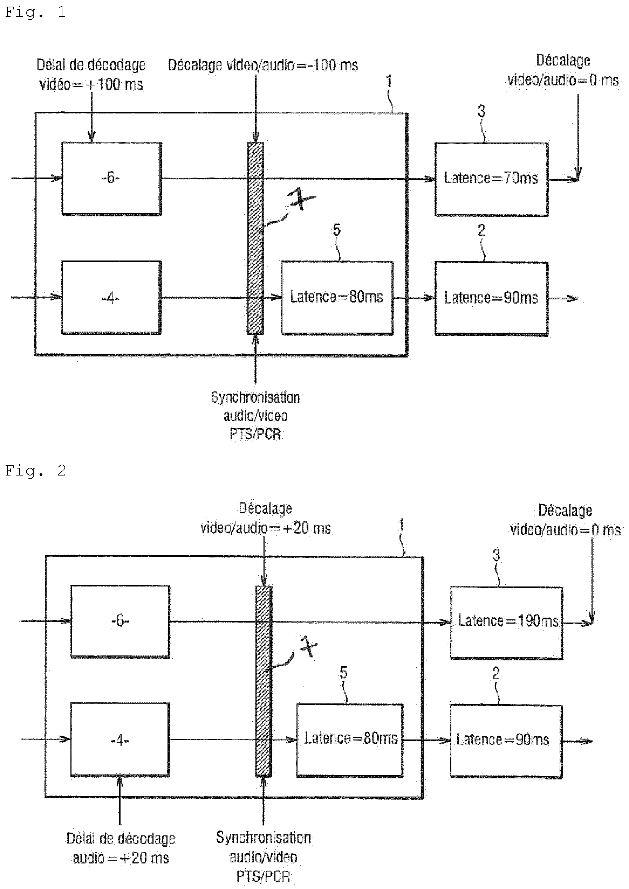

En référence à la figure 1, on illustre ce qui vient d'être dit avec un boîtier décodeur 1 qui est relié à une enceinte 2 et à une télévision 3.

Le boîtier décodeur 1 comprend un module de décodage audio 4 et un module de capture audio 5. Le chemin audio comprend le module de décodage audio 4, le module de capture audio 5 et l'enceinte 2.

Le boîtier décodeur 1 comprend aussi un module de décodage vidéo 6. Le chemin vidéo comprend le module de décodage vidéo 6 et la télévision 3.

Le boîtier décodeur 1 comprend aussi un mécanisme de synchronisation 7 des échantillons audio et des échantillons vidéo par rapport au signal d'horloge de référence.

Dans l'exemple de la figure 1, on considère que l'enceinte 2 introduit dans le chemin audio une latence de 90ms. Le module de capture audio 5 introduit dans le chemin audio une latence de 80ms. La latence audio totale est donc de 170ms.

La télévision 3 introduit quant à elle dans le chemin vidéo une latence de 70ms. La latence vidéo totale est donc de 70ms.

La latence audio est donc supérieure de 100ms à la latence vidéo : un délai sur le chemin vidéo est donc nécessaire.

En référence à la figure 2, à nouveau, l'enceinte 2 introduit dans le chemin audio une latence de 90ms. Le module de capture audio 5 introduit dans le chemin audio une latence de 80ms. La latence audio totale est donc de 170ms.

La télévision 3, cette fois, introduit dans le chemin vidéo une latence de 190ms. La latence vidéo totale est donc de 190ms.

La latence vidéo est donc supérieure de 20ms à la latence audio : un délai sur le chemin audio est donc nécessaire.

Dans les deux cas, ce délai est introduit dans les chemins par l'application, par le mécanisme de synchronisation 7, d'un « délai de décodage » qui retarde le décodage du son ou des images. Le délai de décodage est positif et correspond à un *offset* introduit dans le chemin audio ou dans le chemin vidéo.

Le délai de décodage vidéo est égal à 100ms dans le cas de la figure 1, et le délai de décodage audio est égal à 20ms dans le cas de la figure 2.

EP 3 113 498 A1 divulgue un décalage par envoi aux équipements finaux de diffusion audio/vidéo d'un PCR recalculé. L'introduction d'un délai de décodage dans le chemin audio ou dans le chemin vidéo impacte négativement l'expérience de l'utilisateur.

Le délai de décodage s'applique en effet à chaque action de l'utilisateur sur le flux d'entrée audio/vidéo. Ainsi, par exemple, le temps de « *zapping* » (temps nécessaire pour changer de chaîne de télévision) sera augmenté de ce délai de décodage. Le temps de *zapping* peut donc être augmenté typiquement de 100 à 200ms suivant l'équipement de diffusion audio utilisé, pour un temps de *zapping* total qui est de l'ordre de 800ms dans le meilleur des cas. L'effet du délai de décodage est donc loin d'être négligeable.

OBJET DE L'INVENTION

L'invention a pour objet d'améliorer de manière simple et peu coûteuse l'expérience d'un utilisateur d'un boîtier décodeur.

RESUME DE L'INVENTION

En vue de la réalisation de ce but, on propose un procédé de décodage d'un flux d'entrée audio/vidéo reçu par un boîtier décodeur selon l'invention telle que revendiquée.

Ainsi, dans le procédé de décodage selon l'invention, la différence de latences est compensée non pas en ajoutant systématiquement un *offset* dans le chemin audio ou dans le chemin vidéo, mais en exploitant la différence temporelle entre le PTS et le PCR (si elle est suffisante) pour avancer la diffusion des échantillons (audio ou vidéo) pertinents. L'utilisateur ne subit donc pas l'effet d'un *offset* systématique, et son expérience s'en trouve nettement améliorée.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

[Fig. 1] la figure 1 représente un boîtier décodeur de l'art antérieur, une enceinte et une télévision, la latence audio du chemin audio étant supérieure à la latence vidéo du chemin vidéo ;
[Fig. 2] la figure 2 est une figure similaire à la figure 1, la latence vidéo étant supérieure à la latence audio ;
[Fig. 3] la figure 3 représente un boîtier décodeur dans lequel est mis en oeuvre le procédé de décodage selon l'invention, une enceinte et une télévision, la latence audio étant supérieure à la latence vidéo ;
[Fig. 4] la figure 4 représente des étapes du procédé de décodage selon l'invention, mis en oeuvre dans la configuration de la figure 3 ;
[Fig. 5] la figure 5 est une figure similaire à la figure 3, la latence vidéo étant supérieure à la latence audio ;
[Fig. 6] la figure 6 représente des étapes du procédé de décodage selon l'invention, mis en oeuvre dans la configuration de la figure 5.

DESCRIPTION DETAILLEE DE L'INVENTION

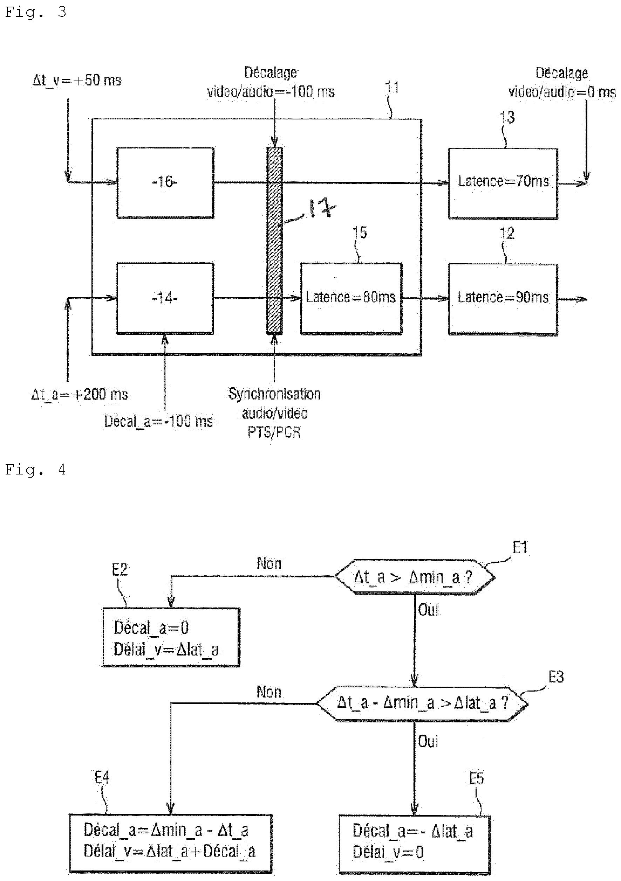

En référence à la figure 3, le procédé de décodage selon l'invention est mis en oeuvre dans un boîtier décodeur 11 qui est relié à un équipement de diffusion audio, en l'occurrence à une enceinte 12, et à un équipement de diffusion vidéo, en l'occurrence à une télévision 13.

Le boîtier décodeur 11 reçoit un flux d'entrée audio/vidéo transportant un signal d'horloge de référence et comportant des échantillons audio et des échantillons vidéo, qui comprennent chacun un marqueur temporel de présentation.

Le boîtier décodeur 11 comprend un module de décodage audio 14 et un module de capture audio 15. Le chemin audio comprend le module de décodage audio 14, le module de capture audio 15 et l'enceinte 12.

Le boîtier décodeur 11 comprend aussi un module de décodage vidéo 16. Le chemin vidéo comprend le module de décodage vidéo 16 et la télévision 13.

Le boîtier décodeur 11 comprend aussi un mécanisme de synchronisation 17 des échantillons audio et des échantillons vidéo par rapport au signal d'horloge de référence.

Dans l'exemple de la figure 3, on considère que l'enceinte 12 introduit dans le chemin audio une latence de 90ms. Le module de capture audio 15 introduit dans le chemin audio une latence de 80ms. La latence audio totale est donc de 170ms.

La télévision 13 introduit quant à elle dans le chemin vidéo une latence de 70ms. La latence vidéo totale est donc de 70ms.

La latence audio est donc supérieure à la latence vidéo.

Dans le flux d'entrée audio/vidéo, les échantillons audio et les échantillons vidéo sont reçus en avance pour être décodés. Cette avance est définie par la différence temporelle entre le marqueur temporel de présentation des échantillons et le signal d'horloge de référence. En pratique, dans le cas de l'audio, cette avance peut varier de 100ms à 1s. Dans le cas de la vidéo, cette avance est moins importante en raison de la bufferisation nécessaire.

Dans l'exemple de la figure 3, la différence temporelle $\Delta t\_a$ pour l'échantillon audio est de 200ms, et la différence temporelle $\Delta t\_v$ pour l'échantillon vidéo est de 50ms.

Plutôt que d'introduire systématiquement dans le chemin vidéo un délai de décodage vidéo positif pour compenser la différence de latences entre le chemin audio et le chemin vidéo, on exploite cette avance en forçant les échantillons audio à sortir plus tôt du mécanisme de synchronisation pour les rendre disponibles plus vite pour leur diffusion.

Le procédé de décodage selon l'invention comporte donc tout d'abord l'étape d'évaluer la latence audio introduite par le chemin audio (ici égale à 170ms) et la latence vidéo introduite par le chemin vidéo (ici égale à 70ms).

Puis, en référence à la figure 4, le procédé de décodage comprend l'étape de vérifier une première condition pour assurer qu'une différence temporelle entre le marqueur temporel de présentation des échantillons audio et le signal d'horloge de référence est suffisante pour assurer un décodage correct des échantillons audio (étape E1).

La première condition est :

$$\Delta t\_a > \Delta min\_a,$$

où $\Delta t\_a$ est la différence temporelle et $\Delta min\_a$ est une durée minimale pour assurer que le décodage audio est correct.

La valeur de $\Delta min\_a$ est une constante à déterminer selon le type de codec, le débit, etc. La détermination est faite par mesure sur un ensemble de flux : on réduit la durée jusqu'à ce que l'audio ne puisse plus être joué correctement par le boîtier décodeur 11.

Si la première condition n'est pas remplie, la différence de latences est compensée entièrement en ajoutant un délai de décodage vidéo positif au moment du décodage vidéo réalisé par le module de décodage vidéo 16 (étape E2).

On a donc :

$$\text{Délai\_v} = \Delta lat\_a,$$

$$\text{Décal\_a} = 0 \; ;$$

où Délai_v est le délai de décodage vidéo positif introduit au moment du décodage vidéo réalisé par le module de décodage vidéo 16, et où $\Delta lat\_a$ est la différence de latences (ici égale à 100ms).

Décal_a = 0 signifie qu'aucun décalage audio n'est appliqué et que le marqueur temporel de présentation des échantillons audio n'est pas diminué.

Cette situation correspond au cas classique, sans mise en oeuvre de l'invention.

Si la première condition est remplie, ce qui est le cas dans notre exemple, le procédé de décodage comprend l'étape de vérifier une deuxième condition pour évaluer si la différence de latences peut être compensée entièrement ou non par la diminution du marqueur temporel de présentation des échantillons audio (étape E3).

La deuxième condition est :

$$\Delta t\_a - \Delta min\_a > \Delta lat\_a.$$

Si la deuxième condition n'est pas remplie, la différence de latences est compensée à la fois :

- en introduisant au moment du décodage audio un décalage audio négatif Décal_a pour diminuer le marqueur temporel de présentation des échantillons audio, tel que :

$$\text{Décal\_a} = \Delta min\_a - \Delta t\_a \; ;$$

- en ajoutant un délai de décodage vidéo positif Délai_v au moment du décodage vidéo, tel que :

$$\text{Délai\_v} = \Delta\text{lat\_a} + \text{Décal\_a (étape E4).}$$

Par contre, si la deuxième condition est remplie, ce qui est le cas dans notre exemple, la différence de latences est entièrement compensée en introduisant au moment du décodage audio un décalage audio négatif Décal_a pour diminuer le marqueur temporel de présentation des échantillons audio, tel que :

$$\text{Décal\_a} = -\Delta\text{lat\_a (étape E5).}$$

Cette situation correspond à l'exemple de la figure 3 où la différence de latences est compensée entièrement par un décalage audio négatif Décal_a égal à -100ms.

On a aussi :

Délai_v = 0, ce qui signifie qu'aucun délai de décodage vidéo n'est introduit dans le chemin vidéo.

Ainsi, plutôt que d'introduire systématiquement un délai de décodage vidéo positif, le procédé de décodage selon l'invention tire profit, lorsqu'elle est suffisante, de la différence temporelle PTS - PCR pour diminuer le marqueur temporel de présentation des échantillons audio et compenser la latence en avançant leur diffusion. L'utilisateur ne subit plus les conséquences de *l'offset* et son expérience est améliorée. Dans l'invention, le mécanisme de synchronisation 17 est utilisé pour décaler l'envoi des échantillons.

La solution mise en oeuvre consiste donc à exploiter le flux d'entrée audio/vidéo pour accélérer le transfert plutôt qu'à introduire un *offset* de manière systématique, comme cela est fait dans l'art antérieur.

Cette solution est particulièrement adaptée à un système comprenant un chemin audio et un chemin vidéo distincts. Elle est permise par le fait que le procédé de décodage est mis en oeuvre dans le boîtier décodeur 11 qui reçoit à la fois le flux audio et le flux vidéo pour les redispatcher vers l'enceinte 12 et la télévision 13, et qui par conséquent maîtrise et peut agir sur le flux d'entrée audio/vidéo.

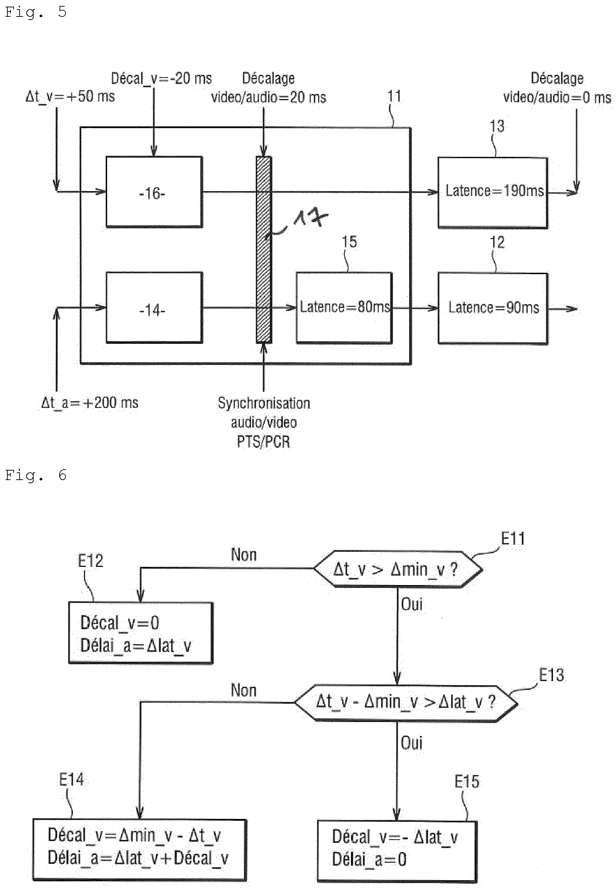

En référence à la figure 5, le procédé de décodage selon l'invention est à nouveau mis en oeuvre dans le boîtier décodeur 11 qui est relié à l'enceinte 12 et à la télévision 13.

Dans l'exemple de la figure 5, on considère que l'enceinte 12 introduit dans le chemin audio une latence de 90ms. Le module de capture audio 15 introduit dans le chemin audio une latence de 80ms. La latence audio totale est donc de 170ms.

La télévision 13 introduit quant à elle dans le chemin vidéo une latence de 190ms. La latence vidéo totale est donc de 190ms.

La latence vidéo est donc supérieure à la latence audio.

Dans le flux d'entrée audio/vidéo, les échantillons audio et les échantillons vidéo sont reçus en avance pour être décodés. Cette avance est définie par la différence temporelle entre le marqueur temporel de présentation des échantillons et le signal d'horloge de référence.

Dans l'exemple de la figure 5, la différence temporelle $\Delta$t_a pour l'échantillon audio est de +200ms, et la différence temporelle $\Delta$t_v pour l'échantillon vidéo est de +50ms.

Plutôt que d'introduire systématiquement dans le chemin audio un délai de décodage audio positif pour compenser la différence de latences entre le chemin audio et le chemin vidéo, on exploite cette avance en forçant les échantillons vidéo à sortir plus tôt du mécanisme de synchronisation pour les rendre disponibles plus vite pour leur diffusion.

Le procédé de décodage selon l'invention comporte donc tout d'abord l'étape d'évaluer la latence audio introduite par le chemin audio (ici égale à 170ms) et la latence vidéo introduite par le chemin vidéo (ici égale à 190ms).

Puis, en référence à la figure 6, le procédé de décodage comprend l'étape, de vérifier une première condition pour assurer qu'une différence temporelle entre le marqueur temporel de présentation des échantillons vidéo et le signal d'horloge de référence est suffisante pour assurer un décodage correct de des échantillons vidéo (étape E11).

La première condition est :

$$\Delta\text{t\_v} > \Delta\text{min\_v,}$$

où $\Delta$t_v est la différence temporelle et $\Delta$min_v est une durée minimale pour assurer que le décodage vidéo est correct.

La valeur de $\Delta$min_v est une constante à déterminer selon le type de codec, le débit, etc. La détermination est faite par mesure sur un ensemble de flux : on réduit la durée jusqu'à ce que la vidéo ne puisse plus être jouée correctement par le boîtier décodeur 11.

Si la première condition n'est pas remplie, la différence de latences est compensée entièrement en ajoutant un délai de décodage audio positif au moment du décodage audio réalisé par le module de décodage audio 14 (étape E12).

On a donc :

$$Délai\_a = \Delta lat\_v,$$

$$Décal\_v = 0 \ ;$$

où Délai_a est le délai de décodage audio positif introduit au moment du décodage audio réalisé par le module de décodage audio 14, et où $\Delta lat\_v$ est la différence de latences (ici égale à 20ms) .

Décal_v = 0 signifie qu'aucun décalage vidéo n'est appliqué et que le marqueur temporel de présentation des échantillons vidéo n'est pas diminué.

Cette situation correspond au cas classique, sans mise en oeuvre de l'invention.

Si la première condition est remplie, ce qui est le cas dans notre exemple, le procédé de décodage comprend l'étape de vérifier une deuxième condition pour évaluer si la différence de latences peut être compensée entièrement ou non par la diminution du marqueur temporel de présentation des échantillons vidéo (étape E13).

La deuxième condition est :

$$\Delta t\_v - \Delta min\_v > \Delta lat\_v.$$

Si la deuxième condition n'est pas remplie, la différence de latences est compensée à la fois :

- en introduisant au moment du décodage vidéo un décalage vidéo négatif Décal_v pour diminuer le marqueur temporel de présentation des échantillons vidéo, tel que :

$$Décal\_v = \Delta min\_v - \Delta t\_v \ ;$$

- en ajoutant un délai de décodage audio positif Délai_a au moment du décodage audio, tel que :

$$Délai\_a = \Delta lat\_v + Décal\_v \ (étape \ E14).$$

Par contre, si la deuxième condition est remplie, ce qui est le cas dans notre exemple, la différence de latences est entièrement compensée en introduisant au moment du décodage vidéo un décalage vidéo négatif Décal_v pour diminuer le marqueur temporel de présentation des échantillons vidéo, tel que :

$$Décal\_v = - \Delta lat\_v \ (étape \ E15).$$

Cette situation correspond à l'exemple de la figure 5 où la différence de latences est compensée entièrement par un décalage vidéo négatif Décal_v de -20ms.

On a aussi :

Délai_a = 0, ce qui signifie qu'aucun délai de décodage audio n'est introduit dans le chemin audio.

Bien entendu, l'invention n'est pas limitée au mode de réalisation décrit mais englobe toute variante entrant dans le champ de l'invention telle que définie par les revendications.

En particulier, les équipements de diffusion reliés au boîtier décodeur ne sont pas nécessairement une enceinte et une télévision.

**Revendications**

1. Procédé de décodage d'un flux d'entrée audio/vidéo reçu par un boîtier décodeur (11) qui est relié à un équipement de diffusion audio (12) et à un équipement de diffusion vidéo (13), le procédé de décodage étant mis en oeuvre dans le boîtier décodeur, le flux d'entrée audio/vidéo transportant un signal d'horloge de référence et comportant des échantillons audio et des échantillons vidéo comprenant chacun un marqueur temporel de présentation, le procédé de décodage comportant les étapes de :

- évaluer une latence audio introduite par un chemin audio et une latence vidéo introduite par un chemin vidéo ;
- si la latence audio (respectivement vidéo) est supérieure à la latence vidéo (resp. audio), vérifier une première condition pour assurer qu'une différence temporelle ($\Delta t\_a$, $\Delta t\_b$) entre le marqueur temporel de présentation des échantillons audio (resp. vidéo) et le signal d'horloge de référence est suffisante pour assurer un décodage correct des échantillons audio (resp. vidéo), et si la première condition est remplie, diminuer au moment d'un décodage audio (resp. vidéo), réalisé par un module de décodage audio (resp. vidéo) appartenant au chemin audio (resp. vidéo) et au boîtier décodeur, le marqueur temporel de présentation des échantillons audio (resp. vidéo) pour avancer une diffusion des échantillons audio (resp. vidéo) et compenser ainsi au moins partiellement une différence de latences ($\Delta lat\_a$, $\Delta lat\_b$) entre la latence audio (resp. vidéo) et la latence vidéo (resp. audio).

2. Procédé de décodage selon la revendication 1, dans lequel la première condition est :

$$\Delta t > \Delta min,$$

où $\Delta t$ est la différence temporelle et $\Delta min$ est une durée minimale pour assurer que le décodage audio (resp. vidéo) est correct.

3. Procédé de décodage selon la revendication 2, dans lequel, si la première condition n'est pas remplie, la différence de latences est compensée entièrement en ajoutant un délai de décodage vidéo (resp. audio) positif au moment du décodage vidéo (resp.audio).

4. Procédé de décodage selon la revendication 2, dans lequel, si la première condition est remplie, le procédé de décodage comprend l'étape de vérifier une deuxième condition pour évaluer si la différence de latences peut être compensée entièrement ou non par la diminution du marqueur temporel de présentation des échantillons audio (resp. vidéo).

5. Procédé de décodage selon la revendication 4, dans lequel la deuxième condition est :

$$\Delta t - \Delta min > \Delta lat,$$

où $\Delta lat$ est la différence de latences.

6. Procédé de décodage selon la revendication 4, dans lequel, si la deuxième condition n'est pas remplie, la différence de latences est compensée :

- en introduisant au moment du décodage audio (resp. vidéo) un décalage audio (resp. vidéo) négatif pour diminuer le marqueur temporel de présentation des échantillons audio (resp. vidéo), tel que :

$$Décal = \Delta min - \Delta t \; ;$$

- en ajoutant un délai de décodage vidéo (resp. audio) positif au moment du décodage vidéo (resp.audio), tel que :

$$Délai = \Delta lat + Décal.$$

7. Procédé de décodage selon la revendication 4, dans lequel, si la deuxième condition est remplie, la différence de latences est entièrement compensée en introduisant au moment du décodage audio (resp. vidéo) un décalage audio (resp. vidéo) négatif pour diminuer le marqueur temporel de présentation des échantillons audio (resp. vidéo), tel que :

$$Décal = - \Delta lat.$$

8. Boîtier décodeur comportant un module de décodage audio et un module de décodage vidéo, le procédé de décodage selon l'une des revendications précédentes étant mis en oeuvre dans le boîtier décodeur.

9. Programme d'ordinateur comprenant des instructions qui conduisent le boîtier décodeur selon la revendication 8 à exécuter les étapes du procédé de décodage selon l'une des revendications 1 à 7.

10. Support d'enregistrement lisible par ordinateur, sur lequel est enregistré le programme d'ordinateur selon la revendication 9.

**Patentansprüche**

1. Dekodierungsverfahren zum Dekodieren eines Audio/Video-Eingangsstroms, der von einer Set-Top-Box (11) empfangen wird, die mit einem Audiowiedergabegerät (12) und mit einem Videowiedergabegerät (13) verbunden ist, wobei das Dekodierungsverfahren in der Set-Top-Box durchgeführt wird, wobei der Audio/Video-Eingangsstrom ein Referenztaktsignal transportiert und Audioproben und Videoproben umfasst, die jeweils einen Präsentationszeitstempel enthalten, wobei das Dekodierungsverfahren die Schritte umfasst:

   - Evaluieren einer Audiolatenz, die durch einen Audiopfad eingebracht wird, und einer Videolatenz, die durch einen Videopfad eingebracht wird;
   - wenn die Audiolatenz (bzw. Videolatenz) größer als die Videolatenz (bzw. Audiolatenz) ist, Verifizieren einer ersten Bedingung, um sicherzustellen, dass eine Zeitdifferenz ($\Delta t\_a$, $\Delta t\_b$) zwischen dem Präsentationszeitstempel der Audioproben (bzw. Videoproben) und dem Referenztaktsignal ausreicht, um eine korrekte Dekodierung der Audioproben (bzw. Videoproben) zu gewährleisten, und wenn die erste Bedingung erfüllt ist, Verringern des Präsentationszeitstempels der Audioproben (bzw. Videoproben) zum Zeitpunkt einer Audiodekodierung (bzw. Videodekodierung), die von einem Audiodekodierungsmodul (bzw. Videodekodierungsmodul) durchgeführt wird, das zum Audiopfad (bzw. Videopfad) und zur Set-Top-Box gehört, um eine Wiedergabe der Audioproben (bzw. Videoproben) vorzuschieben und somit eine Latenzdifferenz ($\Delta lat\_a$, $\Delta lat\_b$) zwischen der Audiolatenz (bzw. Videolatenz) und der Videolatenz (bzw. Audiolatenz) zumindest teilweise zu kompensieren.

2. Dekodierungsverfahren nach Anspruch 1, bei dem die erste Bedingung ist:

$$\Delta t > \Delta min,$$

   wobei $\Delta t$ die Zeitdifferenz und $\Delta min$ eine minimale Dauer ist, um zu gewährleisten, dass die Audiodekodierung (bzw. Videodekodierung) korrekt ist.

3. Dekodierungsverfahren nach Anspruch 2, bei dem, wenn die erste Bedingung nicht erfüllt ist, die Latenzdifferenz vollständig kompensiert wird, indem eine positive Videodekodierungsverzögerung (bzw. Audiodekodierungsverzögerung) zum Zeitpunkt der Videodekodierung (bzw. Audiodekodierung) hinzugefügt wird.

4. Dekodierungsverfahren nach Anspruch 2, bei dem, wenn die erste Bedingung erfüllt ist, das Dekodierungsverfahren den Schritt des Verifizierens einer zweiten Bedingung umfasst, um zu evaluieren, ob die Latenzdifferenz durch die Verringerung des Präsentationszeitstempels der Audioproben (bzw. Videoproben) vollständig kompensiert werden kann oder nicht.

5. Dekodierungsverfahren nach Anspruch 4, bei dem die zweite Bedingung ist:

$$\Delta t - \Delta min > \Delta lat,$$

   wobei $\Delta lat$ die Latenzdifferenz ist.

6. Dekodierungsverfahren nach Anspruch 4, bei dem, wenn die zweite Bedingung nicht erfüllt ist, die Latenzdifferenz kompensiert wird:

   - indem zum Zeitpunkt der Audiodekodierung (bzw. Videodekodierung) ein negativer Audioversatz (bzw. Videoversatz) eingebracht wird, um den Präsentationszeitstempel der Audioproben (bzw. Videoproben) zu verringern, sodass:

$$Versatz = \Delta min - \Delta t;$$

- indem eine positive Videodekodierungsverzögerung (bzw. Audiodekodierungsverzögerung) zum Zeitpunkt der Videodekodierung (bzw. Audiodekodierung) hinzugefügt wird, sodass:

$$Verzögerung = \Delta lat + Versatz.$$

7. Dekodierungsverfahren nach Anspruch 4, bei dem, wenn die zweite Bedingung erfüllt ist, die Latenzdifferenz vollständig kompensiert wird, indem zum Zeitpunkt der Audiodekodierung (bzw. Videodekodierung) ein negativer Audioversatz (bzw. Videoversatz) eingebracht wird, um den Präsentationszeitstempel der Audioproben (bzw. Videoproben) zu verringern, sodass:

$$Versatz = - \Delta lat.$$

8. Set-Top-Box, umfassend ein Audiodekodierungsmodul und ein Videodekodierungsmodul, wobei das Dekodierungsverfahren nach einem der vorhergehenden Ansprüche in der Set-Top-Box durchgeführt wird.

9. Computerprogramm, umfassend Anweisungen, die die Set-Top-Box nach Anspruch 8 dazu veranlassen, die Schritte des Dekodierungsverfahrens nach einem der Ansprüche 1 bis 7 auszuführen.

10. Computerlesbarer Aufzeichnungsträger, auf dem das Computerprogramm nach Anspruch 9 gespeichert ist.

**Claims**

1. A decoding method for decoding an incoming audio/video stream received by a decoder box (11) that is connected to audio playback equipment (12) and to video playback equipment (13), the decoding method being performed in the decoder box, the incoming audio/video stream transporting a reference clock signal and comprising audio samples and video samples including respective presentation time stamps, the decoding method comprising the steps of:

   · evaluating an audio latency introduced by an audio path and a video latency introduced by a video path;
   · if the audio (or respectively video) latency is greater than the video (or resp. audio) latency, testing a first condition to ensure that the time difference ($\Delta t\_a$, $\Delta t\_v$) between the presentation time stamp of the audio (or resp. video) samples and the reference clock signal is sufficient to enable the audio (or resp. video) samples to be decoded correctly, and if the first condition is satisfied, acting, when decoding the audio (or resp. video), to decrease the presentation time stamp of the audio (or resp. video) samples in order to advance playback of the audio (or resp. video) samples, thereby compensating at least in part the latency difference ($\Delta lat\_a$, $\Delta lat\_v$) between the audio (or resp. video) latency and the video (or resp. audio) latency.

2. A decoding method according to claim 1, wherein the first condition is as follows:

$$\Delta t > \Delta min,$$

where $\Delta t$ is the time difference and $\Delta min$ is a minimum duration for enabling the audio (or resp. video) to be decoded correctly.

3. A decoding method according to claim 2, wherein, if the first condition is not satisfied, the latency difference is compensated in full by adding a positive video (or resp. audio) decoding delay when performing the video (or resp. audio) decoding.

4. A decoding method according to claim 2, wherein, if the first condition is satisfied, the decoding method includes the step of testing a second condition to evaluate whether the latency difference can or cannot be compensated in full by decreasing the presentation time stamp of the audio (or resp. video) samples.

**5.** A decoding method according to claim 4, wherein the second condition is as follows:

$$\Delta t - \Delta min > \Delta lat,$$

where $\Delta$lat is the latency difference.

**6.** A decoding method according to claim 4, wherein, if the second condition is not satisfied, the latency difference is compensated:

· by introducing a negative audio (or resp. video) offset when performing audio (or resp. video) decoding, in order to decrease the presentation time stamp of the audio (or resp. video) samples, such that:

$$Offset = \Delta min - \Delta t;$$

· by adding a positive video (or resp. audio) decoding delay when performing video (or resp. audio) decoding, such that:

$$Delay = \Delta lat + Offset.$$

**7.** A decoding method according to claim 4, wherein, if the second condition is satisfied, the latency difference is compensated in full by introducing a negative audio (or resp. video) offset when performing the audio (or resp. video) decoding in order to decrease the presentation time stamp of the audio (or resp. video) samples, such that:

$$Offset = -\Delta lat.$$

**8.** A decoder box including an audio decoder module and a video decoder module, the decoding method according to any preceding claim being performed in the decoder box.

**9.** A computer program including instructions that cause the decoder box according to claim 8 to execute the steps of the decoding method according to any one of claims 1 to 7.

**10.** A computer readable storage medium having stored thereon the computer program according to claim 9.

Fig. 1

Délai de décodage
vidéo=+100 ms

Décalage video/audio=-100 ms

Décalage
video/audio=0 ms

-6-

-7-

Latence=70ms

Latence=80ms

Latence=90ms

Synchronisation
audio/video
PTS/PCR

Fig. 2

Décalage
video/audio=+20 ms

Décalage
video/audio=0 ms

-6-

-7-

Latence=190ms

Latence=80ms

Latence=90ms

-4-

Délai de décodage
audio=+20 ms

Synchronisation
audio/video
PTS/PCR

Fig. 3

$\Delta t\_v=+50$ ms

Décalage video/audio=-100 ms

11

Décalage video/audio=0 ms

13

-16-

-14-

17

15

Latence=80ms

13

Latence=70ms

12

Latence=90ms

$\Delta t\_a=+200$ ms

Décal_a=-100 ms

Synchronisation audio/video PTS/PCR

Fig. 4

E1 — $\Delta t\_a > \Delta min\_a$ ?

Non

Oui

E2 — Décal_a=0, Délai_v=$\Delta lat\_a$

E3 — $\Delta t\_a - \Delta min\_a > \Delta lat\_a$ ?

Non

Oui

E4 — Décal_a=$\Delta min\_a - \Delta t\_a$, Délai_v=$\Delta lat\_a+$Décal_a

E5 — Décal_a=$- \Delta lat\_a$, Délai_v=0

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3113498 A1